# EUROPÄISCHE PATENTANMELDUNG

(11) **EP 2 629 216 A2**
(43) Veröffentlichungstag der Anmeldung: **21.08.2013**
(21) Anmeldenummer: 13155202.8
(22) Anmeldetag: 14.02.2013
(51) Int. Cl.: G06F 17/30

(54) **Verfahren und Anordnung zur Verwaltung von Daten sowie ein entsprechendes Computerprogramm und ein entsprechendes computerlesbares Speichermedium**

(30) Priorität: 16.02.2012 DE 102012202382
(71) Anmelder: Cortado AG, 10559 Berlin (DE)
(72) Erfinder: Mickeleit, Carsten, 12205 Berlin (DE)
(74) Vertreter: Gulde Hengelhaupt Ziebig & Schneider

(57) **Zusammenfassung**

Die Erfindung betrifft ein Verfahren und eine Anordnung zur Verwaltung von Daten sowie ein entsprechendes Computerprogramm und ein entsprechendes computerlesbares Speichermedium, welche insbesondere einsetzbar sind, um die Datenverwaltung auf einem entfernt angeordneten Speichersystem beim Zugriff auf das Speichersystem von einem Endgerät aus zu vereinfachen.

Hierfür wird ein Verfahren zur Verwaltung von Daten vorgeschlagen, wobei die Daten von einem Endgerät aus auf einem entfernten Speicher verwaltet werden, und wobei durch eine auf dem Endgerät installierte Anwendung bei Zugriff durch das Endgerät auf Daten, die an einem Speicherort auf dem entfernten Speicher gespeichert sind, zumindest eine Kennung der Daten und Informationen über den Speicherort der Daten von der Anwendung gespeichert und bei einem Speichern der ggf. geänderten Daten, insbesondere bei einem Zurückschreiben der ggf. geänderten Daten auf den entfernten Speicher, einem Nutzer bereitgestellt werden.

## Beschreibung

Die Erfindung betrifft ein Verfahren und eine Anordnung zur Verwaltung von Daten sowie ein entsprechendes Computerprogramm und ein entsprechendes computerlesbares Speichermedium, welche insbesondere einsetzbar sind, um die Datenverwaltung auf einem entfernt angeordneten Speichersystem beim Zugriff auf das Speichersystem von einem Endgerät aus zu vereinfachen.

Wenn ein Nutzer Daten ändern möchte, die auf einem entfernten Datenspeicher, insbesondere einem Massenspeicher, abgelegt sind, kann er nicht mit dem Original arbeiten, sondern muss eine Kopie der Daten erstellen, die dann zum Bearbeiten auf einem lokalen Endgerät gespeichert sein muss. Unterschiedliche Techniken in den Datenspeichern bewirken dabei eine unterschiedliche Handhabung bei der Nutzung. So muss angepasst an jeden externen Datenspeicher auf dem lokalen Endgerät, auf dem die Daten bearbeitet werden sollen, ein Modul vorhanden und konfiguriert sein, das den Zugriff durchführt. Diese Module sind herkömmlicherweise nur für den Transfer von Daten konzipiert. Darüber hinaus besitzen sie keine Verwaltungs- oder Protokollfunktionen. Der Benutzer ist also selbst verantwortlich für:
- die Überwachung der Versionen,
- den Speicherort der Daten auf dem externen Datenspeicher im richtigen Verzeichnis und
- die Auswahl des richtigen Datenspeichers.

Sollte beispielsweise ein Dateiname mehrfach vergeben worden sein für verschiedene Dateien, die in unterschiedlichen Verzeichnissen auf unterschiedlichen Datenspeichern gespeichert sind, hat der Nutzer erhebliche Probleme, diese Dateien nach einer Änderungen wieder an die gewünschte Stelle auf dem entfernten Datenspeicher zurückzuschreiben, denn die Informationen über den Quellort sind nach dem Kopieren auf das lokale Laufwerk nicht mehr verfügbar. Dieser Aufwand ist bisher nur händisch zu bewältigen.

Bei der Verwendung von herkömmlichen Lösungen zur Datenverwaltung ist somit der Zugriff auf Daten, die auf entfernten Datenspeichern abgelegt sind, unkomfortabel im Vergleich zur Nutzung von lokal gespeicherten Daten. Je nach Art des entfernten Datenspeichers kommen verschiedene Techniken zum Einsatz, um auf den entfernten Datenspeicher zuzugreifen. Ein Nutzer muss mit allen diesen verschiedenen Techniken vertraut sein, um den Datenspeicher nutzen zu können. Darüber hinaus ist eine Datenverwaltung bei Nutzung der herkömmlichen Techniken äußerst fehleranfällig.

Im Stand der Technik werden zur Datenverwaltung Revisionssysteme angeboten, Ihr Schwerpunkt liegt auf der Verfolgung und Protokollierung der Änderung der abgespeicherten Daten, um z.B. auf eine ältere Version zurück greifen zu können. Solche Revisionssysteme erfordern jedoch ein weiteres Modul auf den Datenspeichern. Damit wird die Funktion des (universellen) Datenspeichers erheblich eingeschränkt, denn selbst einfache lesende Zugriffe müssen über dieses Verfahren abgewickelt werden. Darüber hinaus erfordern sie eine strikte Beibehaltung der Verzeichnisse auf dem Massenspeicher und dem lokalen Endgerät. Diese Informationen werden bei der Konfiguration des Revisionskontrollsystem festgelegt. Die Kontrolle des Revisionskontrollsystems und damit die Informationen über den Speicherort erlöschen, wenn die Daten auf dem lokalen Endgerät an eine andere Stelle kopiert oder verschoben wurden.

Die Aufgabe der Erfindung besteht somit darin, ein Verfahren und eine Anordnung zur Verwaltung von Daten sowie ein entsprechendes Computerprogramm und ein entsprechendes computerlesbares Speichermedium bereitzustellen, welche die Nachteile der bekannten Lösungen beheben sowie insbesondere das Lesen von Daten von entfernten Datenspeichern, das Bearbeiten dieser Daten und/oder Ablegen von Daten ggf. bearbeiteten Daten am ursprünglichen Speicherort auf dem entfernten Datenspeicher zu vereinfachen.

Diese Aufgabe wird erfindungsgemäß durch die Merkmale in den Ansprüchen 1 und 8 bis 10 gelöst. Zweckmäßige Ausgestaltungen der Erfindung sind in den Unteransprüchen enthalten.

Ein besonderer Vorteil des erfindungsgemäßen Verfahrens besteht darin, dass die Handhabung von Daten, wie beispielsweise Dateien, die auf einem entfernten Speichersystem abgelegt sind und auf die von einem Endgerät aus zugegriffen wird, für Nutzer des Endgeräts stark vereinfacht wird. Dies wird dadurch erreicht, indem bei dem Verfahren zur Verwaltung von Daten ein Programmmodul vorgesehen ist, das auf einem Endgerät, von dem aus auf die entfernt gespeicherten Daten zugegriffen wird, installiert ist. Dieses Modul unterstützt die Verwaltung der entfernt gespeicherten Daten. Wenn ein Nutzer von einem Endgerät aus auf Daten zugreift, die auf dem entfernt angeordneten Speichersystem abgelegt sind, speichert das Programmmodul Metadaten zu den Daten, auf die zugegriffen wird. Insbesondere speichert das Programmmodul die Metadaten, wenn die Daten von dem Speichersystem auf das Endgerät heruntergeladen und dort gespeichert werden. Bei den Metadaten kann es sich beispielsweise um mindestens eine der folgenden Angaben handeln: um eine Kennung des Speichersystems, auf dem die Daten gespeichert sind, um das Verzeichnis in dem Speichersystem, in dem die Daten gespeichert sind, um eine Kennung der Daten, um Zeitangaben (die Uhrzeit und/oder das Datum) zu der Erstellung, zu der Speicherung und/oder zu einem Zugriff auf die Daten, o.dgl. In einer bevorzugten Ausführungsform ist vorgesehen, dass eine Checksumme über die Daten gebildet wird, um beispielsweise bei einem Zurückschreiben der Daten auf das Speichersystem feststellen zu können, ob die Daten geändert wurden. Die Metadaten können vorzugsweise beim Herunterladen der Daten auf das Endgerät durch das Endgerät, das Speichersystem und/oder eine dritte Datenverarbeitungseinrichtung ermittelt und auch dort gespeichert werden.

Erfindungsgemäß ist weiter vorgesehen, dass zumindest ein Teil der durch das Programmmodul gespeicherten Metadaten bei einem Speichern bzw. Zurückschreiben der ggf. geänderten Daten, welche von dem Speichersystem auf das Endgerät geladen wurden, genutzt werden. Insbesondere ist vorgesehen, dass das Programmmodul automatisch einen Zugriff auf das Verzeichnis in dem Speichersystem, in dem die Daten gespeichert waren, durchführt. Dabei können die ggf. geänderten Daten automatisch in das Verzeichnis zurückgeschrieben oder dem Nutzer ein Menü angeboten werden, beispielsweise ein Dateimanager. Mit Hilfe des Menüs kann der Nutzer ein Verzeichnis auf dem Speichersystem wählen, in dem er die ggf. geänderten Daten ablegen will. Vorzugsweise wird dem Nutzer durch das Menü standardmäßig zuerst das Verzeichnis in dem Speichersystem angeboten, in dem die Daten gespeichert waren, als der Nutzer sie auf das Endgerät heruntergeladen hat. Eine bevorzugte Ausführungsform sieht vor, dass nach Eingabe eines Befehls zum Speichern von Daten, die von dem Speichersystem auf das Endgerät geladen wurden, die Verbindung zu dem Speichersystem, in dem die Daten gespeichert waren, automatisch durch das Programmmodul hergestellt wird. Hierfür greift das Programmmodul auf Kommunikationsprotokolle zu wie bspw. ftp (File Transfer Protocol), http (Hypertext Transfer Protocol), scp (Secure Copy), rsync (Remote Synchronization), die bei den Revisionskontrollsystemen verwendeten Protokolle o. dgl. Das Programmmodul stellt diesen Kommunikationsprotokollen die zum Aufbau der Verbindung zwischen dem Endgerät und dem Speichersystem erforderlichen Informationen, insbesondere zumindest einen Teil der gespeicherten Metadaten zur Verfügung. Vorzugsweise werden zumindest die Kennung der Daten und/oder die Informationen über den Speicherort der Daten, d.h. Informationen über das Verzeichnis in dem Speichersystem, in dem die Daten gespeichert waren, zur Verfügung gestellt. Vorzugsweise ist das Programmmodul mit Anwendungen zur Dokumentenbearbeitung, wie z.B. Microsoft Word®, Excel®, Adobe® Acrobat® verknüpft. Als vorteilhaft erweist es sich, wenn das Programmmodul in die Speicherfunktion der Anwendung integriert ist, so dass bei Nutzung der Speicherfunktion, bspw. bei Nutzung eines Speicherbuttons, das Programmmodul aufgerufen wird.

In einer bevorzugten Ausführungsform ist vorgesehen, dass die Metadaten mit den auf das Endgerät heruntergeladenen Daten verknüpft bleiben, gleich, ob die Daten geändert und/oder von einem ersten an einen zweiten Speicherort, z.B. von einem ersten in ein zweites Verzeichnis, verschoben werden. D.h.: auch wenn die heruntergeladenen Daten verändert und verschoben wurden, wird dem Nutzer, wenn er den Befehl zum Speichern der Daten in das Endgerät eingibt, als Zielort für die Speicherung der Speicherort auf dem entfernten Speichersystem angeboten, von dem die Daten heruntergeladen wurden. Alternativ dazu können die Daten von dem Programmmodul auch automatisch (ohne Rückfrage) an dem Speicherort auf dem entfernten Speichersystem, von dem die Daten heruntergeladen wurden, abgespeichert werden.

Eine bevorzugte Ausführungsform sieht vor, dass die Checksumme über die zurückzuschreibenden Daten gebildet und dem Programmmodul zur Verfügung gestellt wird. Diese Checksumme wird genutzt, um festzustellen, ob die Daten geändert wurden oder nicht. Dieser Vergleich (und auch die Bildung der Checksummen) kann auf dem Endgerät, durch ein auf dem entfernten Speichersystem installiertes Modul oder durch eine dritte Datenverarbeitungseinrichtung durchgeführt werden. Eine Durchführung des Vergleichs auf dem Endgerät hat den Vorteil, dass auf dem Speichersystem keine spezielle Software installiert sein muss. Eine Durchführung des Vergleichs auf dem entfernten Speichersystem hat den Vorteil, dass festgestellt werden kann, ob auf die auf dem entfernten Speichersystem gespeicherten Daten durch Dritte zugegriffen wurde und/oder ob die auf dem entfernten Speichersystem gespeicherten Daten nach dem Herunterladen und vor dem Zurückschreiben durch einen ersten Nutzer durch einen zweiten Nutzer geändert wurden. Wird bei dem Vergleich der Checksummen festgestellt, dass die Checksummen nicht übereinstimmen, wird dies dem Nutzer mitgeteilt. In einer bevorzugten Ausführungsform ist vorgesehen, dass dem Nutzer vorzugsweise durch das Programmmodul eine Möglichkeit angeboten wird zur Entscheidung, ob die auf dem Speichersystem vorhandenen Daten überschrieben werden sollen oder ob der Name der zurückzuschreibenden Daten geändert werden soll. Eine bevorzugte Ausführungsform sieht vor, dass in jedem Falle oder in dem Fall, wenn bereits Daten mit der selben Kennung in dem Verzeichnis auf dem Speichersystem vorliegen, die zurückgeschriebenen Daten vorzugsweise automatisch unter einer neuen Kennung abgespeichert werden. Bei dieser neuen Kennung kann es sich beispielsweise um die ursprüngliche Kennung handeln, die um weitere Merkmale wie z.B. ein Nutzerkürzel, eine Angabe zur Zeit des Zurückschreibens und/oder eine laufende Nummer ergänzt wurde. In einer anderen bevorzugten Ausführungsform ist vorgesehen, dass die Wahlmöglichkeiten für den Nutzer, Daten zu überschreiben oder neue Daten abzulegen, eingeschränkt werden können. Der hier vorgestellte Vorgang der Überprüfung und Speicherung der geänderten Daten kann auch mit Hilfe anderer Metadaten, wie z.B. dem Namen der Datei, dem Datum und der Uhrzeit der Änderung, erfolgen,

Eine andere bevorzugte Ausführungsform sieht vor, dass dem Nutzer bei einem Zugriff auf das entfernte Speichersystem auf optischen Ausgabemitteln des lokalen Endgeräts, in einem auf einem Display dargestellten Menü, solche Daten angezeigt werden, auf die der Nutzer zuletzt zugegriffen hat (Favoriten). Durch eine solche Unterstützung beim Zugriff auf das entfernte Speichersystem wird z.B. das Auffinden von Daten erleichtert, da man sich auf diese Weise von der Verzeichnisstruktur auf dem entfernten Speichersystem löst.

Auch beim Herunterladen von Daten von dem entfernt angeordneten Speichersystem auf das Endgerät wird in einer bevorzugten Ausführungsform der Nutzer vorzugsweise durch das Programmmodul darauf hingewiesen, wenn lokal auf dem Endgerät bereits Daten mit der selben Kennung wie die neu herunterzuladenden Daten vorhanden sind. Vorzugsweise wird dem Nutzer durch ein Menü angeboten, die Kennung der herunterzuladenden Daten beim lokalen Abspeichern zu ändern. Die Änderung kann in einer Erweiterung der ursprünglichen Kennung erfolgen. Damit wird ein Datenverlust durch ein Überschreiben der lokal bereits vorhandenen Daten vermieden. Eine weitere bevorzugte Ausführungsform sieht vor, dass beim Zurückschreiben der Daten auf das Speichersystem diese Änderung der Kennung vorzugsweise automatisch durch das Programmmodul wieder rückgängig gemacht wird. Liest also ein Nutzer Daten von einem ersten Speichersystem auf das Endgerät herunter, und es sind bereits Daten auf dem Endgerät gespeichert, die dieselbe Kennung wie die herunterzuladenden Daten aufweisen, wird der Nutzer darauf hingewiesen. Eine bevorzugte Ausführungsform sieht vor, dass die Kennung der herunterzuladenden Daten automatisch mit Angaben erweitert wird, die auf den Speicherort auf dem entfernten Speichersystem verweisen. So wird verhindert, dass Daten mit gleicher Kennung, die jedoch von unterschiedlichen entfernten Speichersystemen stammen, verwechselt und irrtümlich überschrieben werden. Auf dem Endgerät liegen somit stets eindeutig gekennzeichnete Daten gespeichert vor. Der Hinweis auf Daten, die dieselbe Kennung wie die herunterzuladenden Daten aufweisen, kann unabhängig davon erfolgen, ob sich die bereits vorhandenen Daten in dem lokalen Verzeichnis befinden, in das die herunterzuladenden Daten gespeichert werden sollen.

In einer weiteren bevorzugten Ausführungsform der Erfindung ist vorgesehen, dass die Metadaten so abgespeichert werden, dass auf sie von verschiedenen Endgeräten durch das Programmmodul zugegriffen werden kann, wobei das Programmmodul auf den jeweiligen Endgeräten installiert ist. Wenn von einem solchen Endgerät mit darauf installiertem Programmmodul Daten gespeichert werden sollen, insbesondere auf das entfernte Speichersystem zurückgeschrieben werden sollen, greift das Programmmodul, vorzugsweise automatisch, auf die Metadaten zu, um zu ermitteln, ob es sich bei den zu speichernden Daten um Daten handelt, die vorher von einem entfernten Speichersystem heruntergeladen wurden. Dieses Vorgehen ist besonders dann von Vorteil, wenn Daten von einem ersten Endgerät von dem entfernten Speichersystem heruntergeladen wurden, anschließend von dem ersten Endgerät an ein zweites Endgerät übertragen werden und von dem zweiten Endgerät, gegebenenfalls nach einer Bearbeitung, wieder auf das entfernte Speichersystem zurückgeschrieben werden sollen. Die Daten werden somit immer daraufhin geprüft, ob sie zu einem früheren Zeitpunkt von einem entfernten Speichersystem heruntergeladen wurden, und zwar unabhängig davon, ob die Daten durch das speichernde Endgerät von dem entfernten Speichersystem heruntergeladen wurden. In dieser Ausführungsform werden die Metadaten vorzugsweise auf einer von dem ersten und zweiten Endgerät und dem entfernten Speichersystem verschiedene, dritte Datenverarbeitungseinrichtung gespeichert, auf die durch das auf dem ersten und zweiten Endgerät installierte Programmmodul zugegriffen werden kann.

Eine Anordnung nach der Erfindung weist mindestens einen Chip und/oder Prozessor auf und ist derart eingerichtet, dass ein Verfahren zur Verwaltung von Daten ausführbar ist, wobei ein Endgerät mit zumindest einem entfernten Speicher zusammenwirkt und wobei die Daten von dem Endgerät aus auf dem zumindest einen entfernten Speicher verwaltet werden. Dabei werden durch eine auf dem Endgerät installierte Anwendung bei Zugriff durch das Endgerät auf Daten, die an einem Speicherort auf dem entfernten Speicher gespeichert sind, zumindest eine Kennung der Daten und Informationen über den Speicherort der Daten gespeichert und bei einem Speichern der ggf. geänderten Daten, insbesondere bei einem Zurückschreiben der ggf. geänderten Daten auf den entfernten Speicher, einem Nutzer bereitgestellt.

Ein Computerprogramm zur Verwaltung von Daten ermöglicht es einer Datenverarbeitungseinrichtung, die zumindest ein Endgerät und zumindest einem von dem zumindest einen Endgerät entfernt angeordneten Speicher umfasst, nachdem das Computerprogramm in Speichermittel der Datenverarbeitungseinrichtung, insbesondere in Speichermittel des zumindest einen Endgeräts, geladen worden ist, ein Datenverwaltungsverfahren durchzuführen, wobei die Daten von einem Endgerät aus auf einem entfernten Speicher verwaltet werden, durch eine auf dem Endgerät installierte Anwendung bei Zugriff durch das Endgerät auf Daten, die an einem Speicherort auf dem entfernten Speicher gespeichert sind, zumindest eine Kennung der Daten und Informationen über den Speicherort der Daten von der Anwendung gespeichert und bei einem Speichern der ggf. geänderten Daten, insbesondere bei einem Zurückschreiben der ggf. geänderten Daten auf den entfernten Speicher, einem Nutzer bereitgestellt werden.

In einer weiteren bevorzugten Ausführungsform der Erfindung ist vorgesehen, dass das erfindungsgemäße Computerprogramm modular aufgebaut ist, wobei einzelne Module auf verschiedenen Teilen der Datenverarbeitungseinrichtung installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten-oder Kommunikationsnetz bereitgestellt werden. Die so bereitgestellten Computerprogramme können dann durch ein Verfahren nutzbar gemacht werden, bei dem ein Computerprogramm nach Anspruch 9 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren zur Verwaltung von Daten durchzuführen, ist vorgesehen, ein computerlesbares Speichermedium einzusetzen, auf dem ein Programm gespeichert ist, das es einer Datenverarbeitungseinrichtung ermöglicht, nachdem es in Speichermittel der Datenverarbeitungseinrichtung geladen worden ist, ein Datenverwaltungsverfahren durchzuführen, wobei die Daten von einem Endgerät aus auf einem entfernten Speicher verwaltet werden, durch eine auf dem Endgerät installierte Anwendung bei Zugriff durch das Endgerät auf Daten, die an einem Speicherort auf dem entfernten Speicher gespeichert sind, zumindest eine Kennung der Daten und Informationen über den Speicherort der Daten von der Anwendung gespeichert und bei einem Speichern der ggf. geänderten Daten, insbesondere bei einem Zurückschreiben der ggf. geänderten Daten auf den entfernten Speicher, einem Nutzer bereitgestellt werden.

Die vorliegende Erfindung bietet insbesondere folgende Vorteile:

Der Nutzer interagiert nur noch mit einem Programmmodul zur Kommunikation mit einem oder mehreren entfernten Datenspeichern. Er ist davon befreit, sich mit den unterschiedlichen Zugriffsmechanismen zu befassen.

Der Nutzer wird beim Speichern sofort über Dateiänderungen informiert.

Der Nutzer ist davon befreit, den richtigen Datenspeicher und das richtige Verzeichnis lokal und/oder auf dem entfernten Speichersystem auszuwählen, die Dateiversionen zu prüfen und die Daten auf den Datenspeicher zu kopieren, ggf. vorher die Datei noch umzubenennen. Es erfolgt automatisch eine Revisionskontrolle.

Bei einem von mehreren Nutzern genutzten externen Datenspeicher ist es möglich, trotz verschiedenen Kopien auf lokalen Geräten der unterschiedlichen Nutzer weiterhin die Kontrolle über die verschiedenen Versionen zu haben.

Liest der Nutzer die Daten erneut vom Datenspeicher, wird er darauf hingewiesen, dass er bereits eine Kopie angelegt hat. Anhand der Metadaten kann auch erkannt werden, ob die lokal gespeicherten Daten bereits geändert wurden. (Das ist auch der Fall, wenn die Daten auf dem Datenspeicher geändert wurden, nachdem der Nutzer eine lokale Kopie angelegt hat. Es lässt sich an Hand der Zeitstempel aus den Metadaten sofort erkennen).

Während herkömmlicherweise entfernte Datenspeicher über Protokolle wie ftp, http, scp, rsync o.dgl. angesprochen werden, setzt das erfindungsgemäße Programmmodul auf derartige Kommunikationsprotokolle auf und erweitert so deren Funktionalität. Es werden daher durch die Erfindung Funktionen bereitgestellt, die diese Kommunikationsprotokolle allein nicht bieten.

Die Erfindung wird nachfolgend unter Bezugnahme auf die Figuren der Zeichnungen an einem Ausführungsbeispiel näher erläutert. Es zeigt:

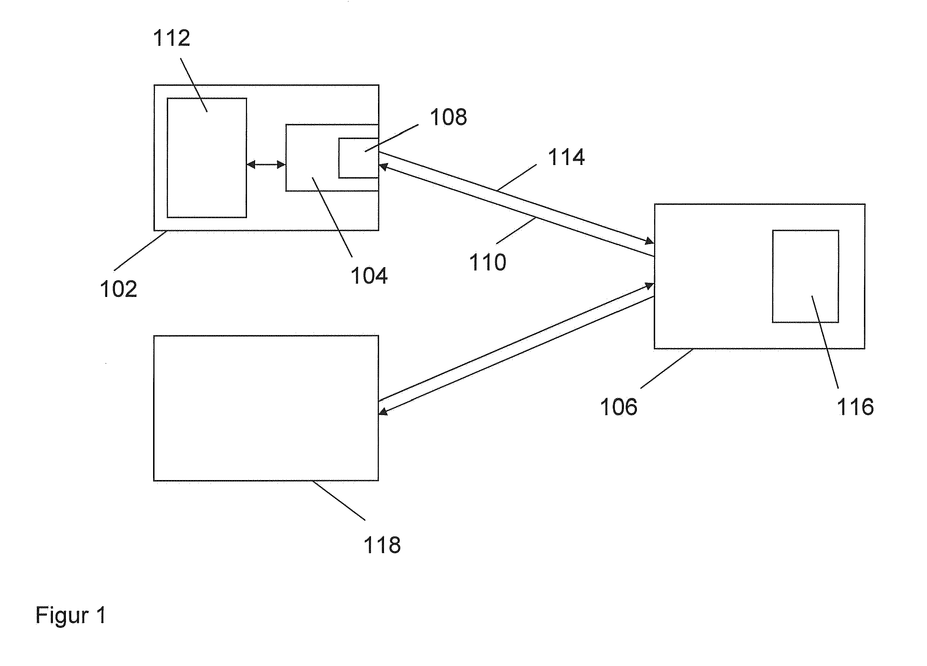

- Figur 1: eine schematische Veranschaulichung einer beispielhafte Architektur für die Ausführung des erfindungsgemäßen Datenverwaltungsverfahrens und

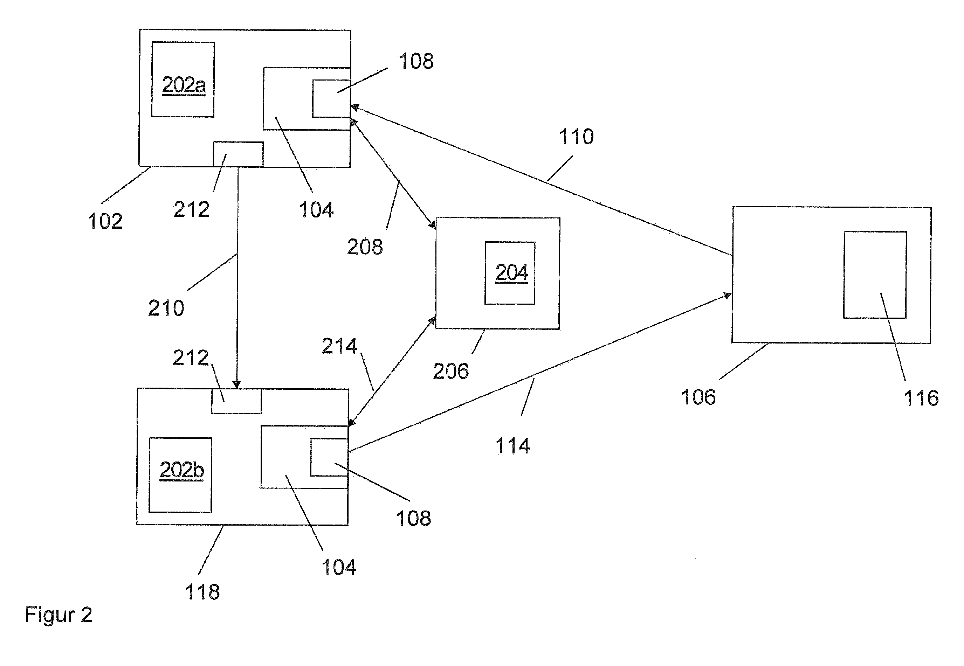

- Figur 2: eine Veranschaulichung einer beispielhafte alternativen Ausführungsform der Erfindung.

In der beispielhaften Ausführungsform ist auf einem lokalen Gerät 102 ein Modul 104 installiert, das die Verbindung zu einem oder mehreren externen, entfernt angeordneten Datenspeichern 106 herstellt. Während die beispielhafte Ausführungsform am Beispiel nur eines entfernt angeordneten Datenspeichers 106 beschrieben wird, umfasst die Erfindung auch Ausführungsformen, bei denen von dem lokalen Gerät 102 aus auf mehrere entfernt angeordnete Datenspeicher 106 zugegriffen wird. Dieses Modul 104 dient als Benutzerschnittstelle zu dem mindestens einen externen, entfernt angeordneten Datenspeicher 106. Insbesondere präsentiert es die auf dem entfernt angeordneten Datenspeicher 106 gespeicherten Dateien dem Nutzer, z.B. über eine optische Schnittstelle, bspw. auf einem Display des lokalen Geräts 102. Der Benutzer tauscht vorzugsweise nur über dieses Modul 104 Dateien mit dem entfernt angeordneten Datenspeicher 106 aus, wobei das Modul 104 für die eigentliche Übertragung der Dateien auf herkömmliche Kommunikationsprotokolle 108, wie z.B. ftp, http, scp, rsync o.dgl. zugreift.

Kopiert der Nutzer unter Verwendung des Moduls 104 eine Datei von dem entfernt angeordneten Datenspeicher 106 auf das lokale Gerät 102 (wobei das Kopieren durch das Bezugszeichen 110 veranschaulicht ist), werden dabei durch das Modul 104 weitere Informationen, insbesondere Metatdaten, die den Zugriff und/oder die Datei näher beschreiben, gespeichert. Vorzugsweise handelt es sich bei den weiteren Informationen zumindest um einen Verweis auf den entfernt angeordneten Datenspeicher 106, das Verzeichnis auf dem entfernt angeordneten Datenspeicher 106, in dem die Datei gespeichert ist, eine Zeitangabe (Datum, Uhrzeit o.dgl.) des Zugriffs. In der beispielhaften Ausführungsform ist weiter vorgesehen, dass parallel dazu eine erste Checksumme über die auf dem entfernt angeordneten Datenspeicher 106 gespeicherte Datei gebildet wird. Diese erste Checksumme wird ebenfalls gespeichert. Für eine Bearbeitung der Datei wird eine dem Dateiformat entsprechende Anwendung 112 auf dem lokalen Gerät 102 gestartet. Nach einer Bearbeitung der Datei durch den Benutzer soll die Datei wieder auf dem entfernt angeordneten Datenspeicher 106 abgelegt werden. Dazu wird die Datei an das Modul 104 übergeben. Gemäß der beispielhaften Ausführungsform wird das Modul 104 durch Aktivierung einer Speicherfunktionalität der Anwendung 112 aufgerufen. Durch das Modul wird zumindest ein Teil der Metadaten ermittelt und eine zweite Checksumme über die abzuspeichernde Datei gebildet. Mit Hilfe dieser Metadaten werden der entfernt angeordnete Datenspeicher 106 und das Ursprungsverzeichnis auf dem entfernt angeordneten Datenspeicher 106, von dem die Datei heruntergeladen wurde, ermittelt. Die eigentliche Übertragung 114 der Datei von dem lokalen Gerät 102 auf den entfernt angeordneten Datenspeicher 106 wird durch die herkömmlichen Kommunikationsprotokolle 108 durchgeführt. Diese Kommunikationsprotokolle 108 werden durch das Modul 104 angesprochen. Die zweite Checksumme wird mit der ersten, beim Herunterladen gebildeten Checksumme verglichen. Sind diese voneinander verschieden, wird der Benutzer darauf hingewiesen. Er kann dann entscheiden, ob die Datei auf dem entfernt angeordneten Datenspeicher 106 vorhandene Datei überschrieben, ob eine neue Datei mit anderem Namen angelegt oder ob die Datei in einem anderen Verzeichnis (mit geändertem oder unverändertem Namen) abgelegt werden soll.

In einer anderen beispielhafte Ausführungsform ist auf dem entfernt angeordneten Datenspeicher 106 ein Computerprogramm 116 gespeichert, welches die Nutzung von Dateien durch mehrere Nutzer, die von dem lokalen Gerät 102 oder einem anderen Gerät 118 auf die auf dem entfernt angeordneten Datenspeicher 106 gespeicherten Dateien zugreifen, steuert. Insbesondere erfolgt durch das Computerprogramm 116 eine Revisionskontrolle. Es ist beispielsweise vorgesehen, dass insbesondere bei einem durch einen ersten Benutzer vorgenommenen Zurückschreiben einer Datei durch das Computerprogramm 16 geprüft wird, ob die auf dem entfernt angeordneten Datenspeicher 106 verbliebene (ursprüngliche) Datei durch einen zweiten Benutzer geändert wurde, nachdem sie von dem ersten Benutzer heruntergeladen wurde. Wird eine solche zwischenzeitliche Änderung festgestellt, wird der Benutzer entsprechend informiert. Er hat dann alle oben erwähnten Möglichkeiten zur Abspeicherung der zurückzuschreibenden Datei, wie z.B. Überschreiben der vorhandenen Datei überschrieben, Anlegen einer neue Datei mit anderem Namen oder Ablegen der Datei in einem anderen Verzeichnis (mit geändertem oder unverändertem Namen).

Anhand einer weiteren Ausführungsform soll die Erfindung veranschaulicht werden, für den Fall, dass Daten von dem entfernt angeordneten Datenspeicher 106 auf ein erstes lokales Gerät 102 heruntergeladen (Bezugszeichen 110) und von dem ersten lokalen Gerät 102 an ein zweites Gerät 118 übertragen werden.

In dieser Ausführungsform werden die Metadaten 204 wie in den oben beschriebenen Ausführungsformen ermittelt. Die Metadaten 204 werden auf einer weiteren Datenverarbeitungseinrichtung, beispielsweise einem Server 206, gespeichert. Der Server 206 kann ein alleinstehendes Gerät sein oder aber beispielsweise auf dem entfernt angeordneten Datenspeicher 106 installiert sein. Auf jeden Fall ist der Server 206 durch das auf dem ersten 102 und dem zweiten 118 installierte Modul 104 kontaktierbar, um auf die dort gespeicherten Metadaten 204 zuzugreifen.

Im einzelnen werden folgende Schritte ausgeführt: Bei einem Herunterladen 110 von Daten von dem entfernt angeordneten Datenspeicher 106 auf das erste lokale Gerät 102 werden wie oben die zu den Daten gehörigen Metadaten durch das Modul 104 ermittelt und auf einem Server 206 abgespeichert (Bezugszeichen 208). Nach diesem Schritt ist eine Kopie 202a der Daten auf dem ersten lokalen Gerät 102 gespeichert. Anschließend können die Daten bzw. eine Kopie der Daten von dem ersten lokalen Gerät 102 an das zweite Gerät 118 übertragen werden (Bezugszeichen 210), beispielsweise durch eine E-Mail-Anwendung 212. Auf dem zweiten Gerät 118 wird eine Kopie 202b der Daten gespeichert, die gegebenenfalls bearbeitet werden kann. Wenn die Daten bzw. die Kopie 202b der Daten wieder gespeichert, beispielsweise an den entfernt angeordneten Datenspeicher 106 zurückgeschrieben werden sollen, werden, wie oben im Zusammenhang mit den alternativen Ausführungsformen beschrieben, die zu den gegebenenfalls geänderten Daten gehörigen Metadaten ermittelt und vorzugsweise eine Checksumme über die gegebenenfalls geänderten Daten gebildet. Anschließend greift das auf dem zweiten Gerät 118 installierte Modul 104 auf den Server 206 zu (Bezugszeichen 214), um die auf dem Server 206 gespeicherten zu den Daten gehörigen Metadaten 204 zu ermitteln und mit den auf dem zweiten Gerät 118 neu ermittelten Metadaten und Checksumme zu vergleichen. Wenn das Modul 104 auf dem Server 206 vergleichbare Metadaten ermittelt hat, teilt es das dem Nutzer des zweiten Geräts 118 mit, bietet ihm für das Speichern beispielsweise ein Menü mit einer Verzeichnisstruktur, z.B. einen Dateimanager, an und informiert den Nutzer gegebenenfalls darüber, dass in dem Zielverzeichnis bereits eine Datei gleichen Namens vorhanden ist. Vorzugsweise wird dem Nutzer in dem Menü das Ursprungsverzeichnis, von dem die Daten heruntergeladen wurden, angezeigt. Zusammen mit der Information über bereits vorhandene Daten wird dem Nutzer vorzugsweise automatisch eine Auswahlmöglichkeit angeboten, über die er entscheiden kann, ob die vorhandenen Daten überschrieben oder die zurückzuschreibenden Daten unter einem neuen Namen gespeichert werden sollen. Anschließend werden die Daten zurückgeschrieben (Bezugszeichen 114).

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung und dem erfindungsgemäßen Verfahren auch bei grundsätzlich anders gearteten Ausführungen Gebrauch macht.

## Patentansprüche

1. Verfahren zur Verwaltung von Daten, wobei die Daten von einem Endgerät aus auf einem entfernten Speicher verwaltet werden,
***dadurch gekennzeichnet, dass***
durch eine auf dem Endgerät installierte erste Anwendung bei Zugriff durch das Endgerät auf Daten, die an einem Speicherort auf dem entfernten Speicher gespeichert sind, zumindest folgendes gespeichert wird:
- eine Kennung der Daten und
- Informationen über den Speicherort der Daten auf dem entfernten Speicher,
und die erste Anwendung in Reaktion auf einen Befehl zum Speichern der Daten, der durch einen Nutzer in das Endgerät eingegeben wurde, dem Nutzer das Speichern an dem durch die Informationen angegebenen Speicherort auf dem entfernten Speicher anbietet oder die Daten automatisch an dem durch die Informationen angegebenen Speicherort auf dem entfernten Speicher speichert.

2. Verfahren nach Anspruch 1,
***dadurch gekennzeichnet, dass***
die Daten von dem entfernten Speicher an einen ersten Speicherort auf dem Endgerät heruntergeladen und anschließend an einen zweiten Speicherort verschoben werden, wobei in Reaktion auf den Befehl zum Speichern der verschobenen Daten die erste Anwendung dem Nutzer das Speichern an dem durch die Informationen angegebenen Speicherort auf dem entfernten Speicher anbietet oder die Daten automatisch an dem durch die Informationen angegebenen Speicherort auf dem entfernten Speicher speichert.

3. Verfahren nach Anspruch 1 oder 2,
***dadurch gekennzeichnet, dass***
die Daten vor der Eingabe des Befehls zum Speichern geändert wurden.

4. Verfahren nach einem der voranstehenden Ansprüche,
***dadurch gekennzeichnet, dass***
bei einem Herunterladen der Daten von dem entfernten Speicher auf das Endgerät eine erste Checksumme der Daten und beim Zurückschreiben der ggf. geänderten Daten auf den entfernten Speicher eine zweite Checksumme gebildet wird, die erste und zweite Checksumme miteinander verglichen werden und bei differierenden Checksummen dem Nutzer ein Hinweis auf die differierenden Checksummen gegeben wird und/oder die ggf. geänderten Daten mit geänderter Kennung abgespeichert werden.

5. Verfahren nach einem der voranstehenden Ansprüche,
***dadurch gekennzeichnet, dass***
zumindest die Kennung der Daten und/oder die Informationen über den Speicherort der Daten durch zumindest eine der folgenden Einheiten ermittelt werden:
- das Endgerät,
- den entfernten Speicher und
- eine dritte Datenverarbeitungseinrichtung.

6. Verfahren nach einem der voranstehenden Ansprüche,
***dadurch gekennzeichnet, dass***
auf dem entfernten Speicher eine zweite Anwendung installiert ist, welche den Zugriff mehrerer Nutzer auf den entfernten Speicher steuert, wobei vorzugsweise durch die zweite Anwendung einem ersten Nutzer eine Änderung von Daten durch einen zweiten Nutzer signalisiert wird.

7. Verfahren nach einem der voranstehenden Ansprüche,
***dadurch gekennzeichnet, dass***
zumindest die bei einem Zugriff durch das Endgerät auf die Daten, die an einem Speicherort auf dem entfernten Speicher gespeichert sind, ermittelten Kennung der Daten und Informationen über den Speicherort der Daten auf dem Endgerät und/oder auf einer von dem Endgerät verschiedenen Datenverarbeitungseinrichtung gespeichert werden.

8. Verfahren nach Anspruch 7,
***dadurch gekennzeichnet, dass***
die gespeicherte Kennung der Daten und die gespeicherten Informationen über den Speicherort der Daten zumindest einem zweiten Endgerät zum Speichern von Daten verfügbar gemacht werden.

9. Verfahren nach einem der voranstehenden Ansprüche,
***dadurch gekennzeichnet, dass***
die Anwendung auf Kommunikationsprotokolle, die für einen Datenaustausch mit dem entfernten Speicher ausgelegt sind, aufsetzt.

10. Anordnung mit mindestens einem Chip und/oder Prozessor, wobei die
Anordnung derart eingerichtet ist, dass ein Verfahren zur Verwaltung von Daten gemäß einem der Ansprüche 1 bis 9 ausführbar ist.

11. Computerprogramm, das es einer Datenverarbeitungseinrichtung ermöglicht, nachdem es in Speichermittel der Datenverarbeitungseinrichtung geladen worden ist, ein Verfahren zur Verwaltung von Daten gemäß einem der Ansprüche 1 bis 9 durchzuführen.

12. Computerlesbares Speichermedium, auf dem ein Programm gespeichert ist,
das es einer Datenverarbeitungseinrichtung ermöglicht, nachdem es in Speichermittel der Datenverarbeitungseinrichtung geladen worden ist, ein Verfahren zur Verwaltung von Daten gemäß einem der Ansprüche 1 bis 9 durchzuführen.
